# EUROPEAN PATENT APPLICATION

(11) **EP 4 059 736 A1**
(43) Date of publication of application: **21.09.2022**
(21) Application number: 21178137.2
(22) Date of filing: 08.06.2021
(51) Int. Cl.: B60B 1/04, B60B 3/10, B60B 5/02, B60B 7/04, B60B 7/06, B60B 27/06

(54) **WHEEL RIM ASSEMBLY**

(30) Priority: 16.03.2021 TW 110109351
(71) Applicant: Advanced International Multitech Co., Ltd., Kaohsiung City 81260 (TW)
(72) Inventor: HSIAO, Te-Fu, Kaohsiung City 80457 (TW); KUO, Che-Hao, Kaohsiung City 81260 (TW); CHANG, Chung-Hsin, Kaohsiung City 81260 (TW); WANG, Chia-Hsin, Kaohsiung City 81260 (TW)
(74) Representative: Jones, David Alan

(57) **Abstract**

A wheel rim assembly includes a rim (2) defining a rim opening (21), a wheel disc (3) disposed in the rim opening (21), a plurality of first fastening members (4) fastening the wheel disc (3) to the rim (2) , and a plurality of second fastening members (5) . The wheel disc (3) includes a centre disc (31) defining a centre bore (311) that is coaxial with the rim (2), and a plurality of spokes (32) interconnecting the centre disc (31) and the rim (2) . The first fastening members (4) fasten the spokes (32) to the rim (2) such that removal of the first fastening member (4) permits separation of the spoke (32) from the rim (2). The second fastening members (5) fasten the spokes (32) to the centre disc (31) such that removal of the second fastening member (5) permits separation of the spoke (32) from the centre disc (31).

## Description

The disclosure relates to a wheel, and more particularly to a wheel rim assembly.

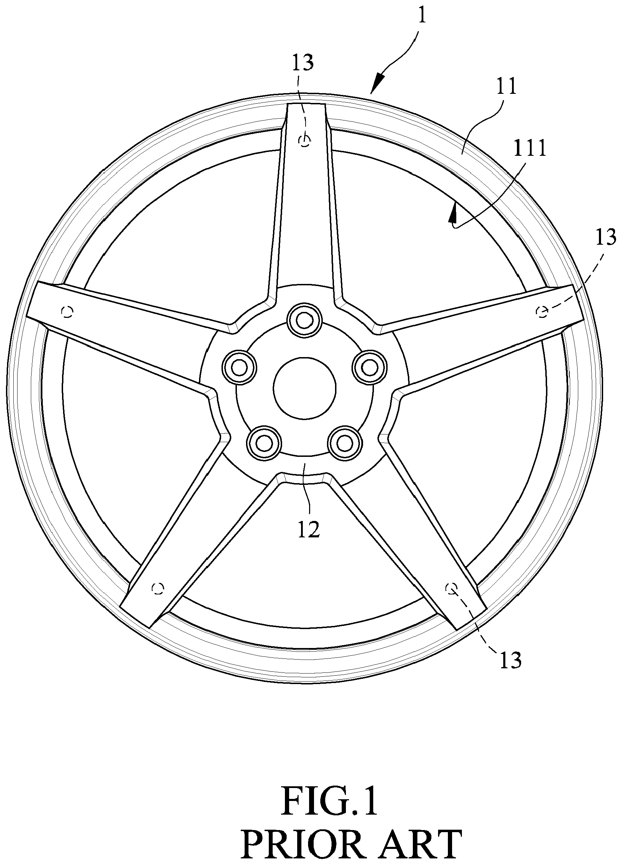

Referring to Figure 1, a conventional wheel rim assembly 1 is shown and includes a rim 11 defining an inner space 111, a wheel disc 12 disposed in the inner space 111, and a plurality of bolts 13 securing the wheel disc 12 to the rim 11. Although the conventional wheel rim assembly 1 is structurally simple, the external appearance of the conventional wheel rim assembly 1 cannot be changed easily, as the whole wheel disc 12 needs to be replaced in order to change the conventional wheel rim assembly's 1 appearance. Therefore, when the external appearance of the conventional wheel rim assembly 1 is to be changed, a new wheel disc would need to be manufactured, thereby limiting the scope of application of the conventional wheel assembly 1.

Therefore, an object of the disclosure is to provide a wheel assembly that can alleviate at least one of the drawbacks of the prior art.

Accordingly, a wheel rim assembly includes a rim that defines a rim opening, a wheel disc that is disposed in the rim opening, and a plurality of first fastening members that fasten the wheel disc to the rim. The wheel disc includes a centre disc defining a centre bore that is coaxial with the rim, and a plurality of spokes interconnecting the centre disc and the rim. Each of the first fastening members fastens removably a respective one of the spokes to the rim such that removal of the first fastening member permits separation of the spoke from the rim. The wheel rim assembly further includes a plurality of second fastening members. Each of the second fastening members fastens removably a respective one of the spokes to the centre disc such that removal of the second fastening member permits separation of the spoke from the centre disc.

Other features and advantages of the disclosure will become apparent in the following detailed description of the embodiments with reference to the accompanying drawings, of which:
Figure 1 is a side view illustrating a conventional wheel rim assembly;
Figure 2 is a side view illustrating an embodiment of a wheel rim assembly according to the disclosure;
Figure 3 is a sectional view of the embodiment with a plurality of securing members and adornment panels being omitted;
Figure 4 is another side view illustrating the embodiment;

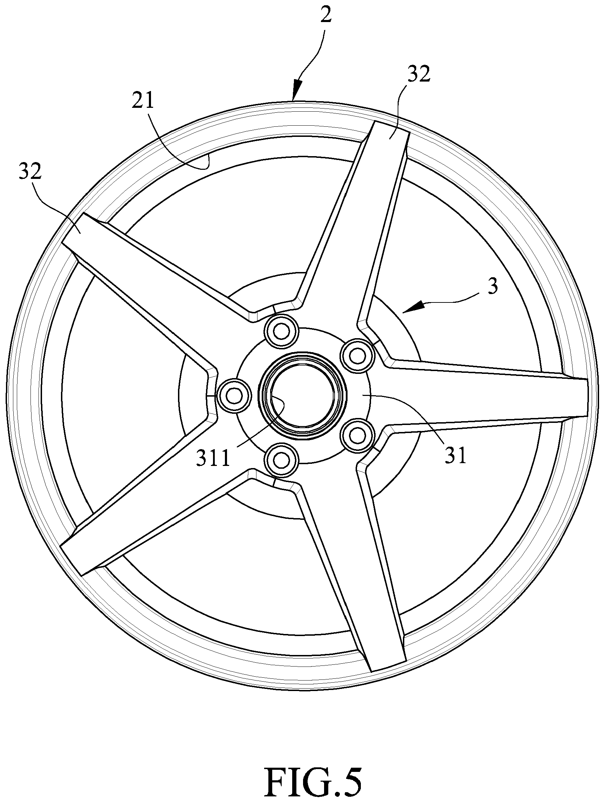

Figure 5 is a side view of the embodiment with with the adornment panels being omitted; and
Figure 6 is a side view illustrating a variation of the embodiment.

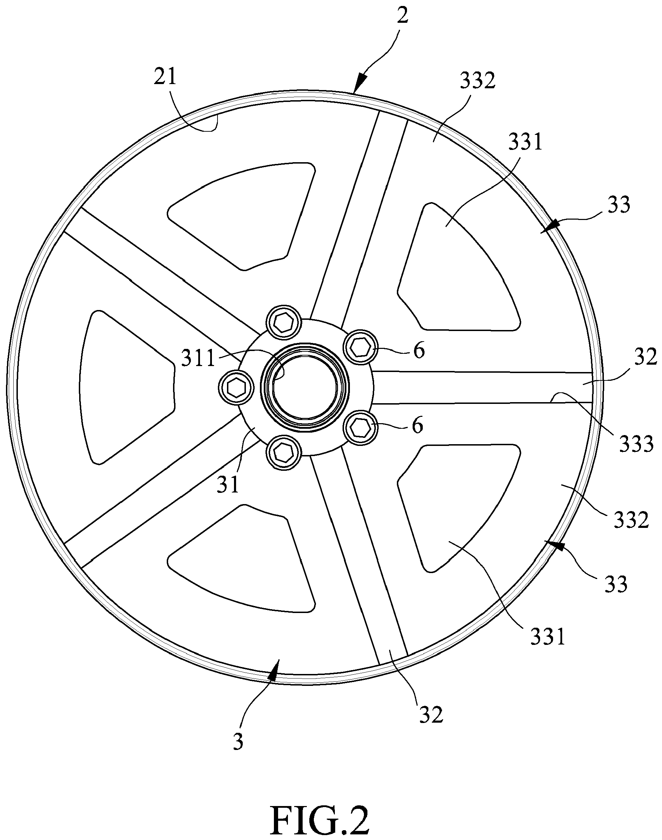

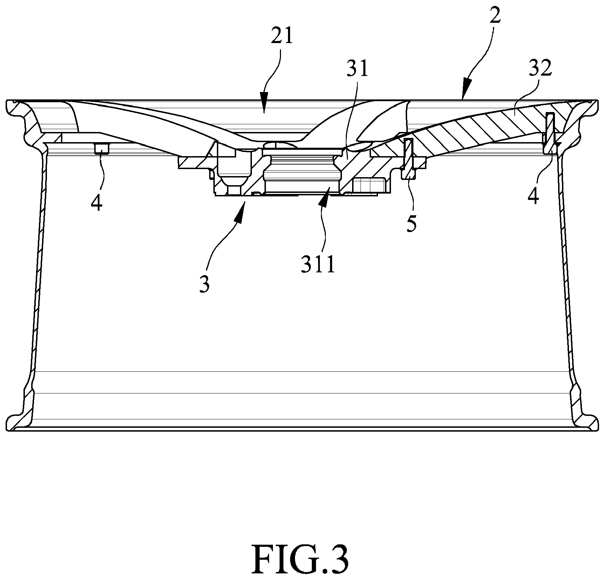

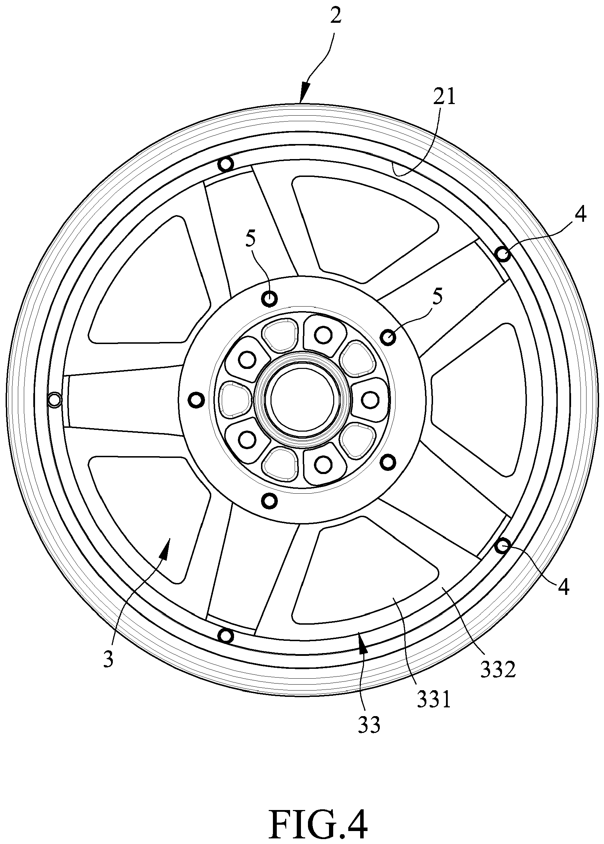

Referring to Figures 2, 3 and 4, an embodiment of the wheel rim assembly of the present disclosure is shown. The wheel rim assembly includes a rim 2 that defines an inner rim space. The inner rim space has a rim opening 21. The wheel rim assembly further includes a wheel disc 3 that is disposed in the rim opening 21, and that includes a centre disc 31 and a plurality of spokes 32. The centre disc 31 defines a centre bore 311 that is coaxial with the rim 2. The spokes 32 interconnect the centre disc 31 and the rim 2.

The wheel rim assembly further includes a plurality of first fastening members 4 that fasten the wheel disc 3 to the rim 2, and a plurality of second fastening members 5 that fasten the wheel disc 3 to the rim 2. Each of the first fastening members 4 is disposed within the rim 2, extends parallel to a central axis of the rim 2, and fastens removably a respective one of the spokes 32 to the rim 2 such that removal of the first fastening member 4 permits separation of the spoke 32 from the rim 2.

Each of the second fastening members 5 is disposed within the rim 2, extends parallel to the central axis of the rim 2, and fastens removably a respective one of the spokes 32 to the centre disc 31 such that removal of the second fastening member 5 permits separation of the spoke 32 from the centre disc 31.

The wheel rim assembly further includes a plurality of securing members 6 that extend parallel to the central axis of the rim 2 from an outer side of the wheel disc 3 into the centre disc 31 to be secured to the wheel disc 3.

In the present embodiment, the rim 2 is made of a carbon fibre composite material. However, in other embodiments of the wheel rim assembly, materials other than carbon fibre composite materials may be used to make the rim 2.

In the present embodiment, the spokes 32 are equiangularly spaced apart on the rim 2, and the wheel disc 3 further includes a plurality of adornment panels 33 arranged along a circumference of the rim 2. In the present embodiment, each of the adornment panels 33 is registered with a space between a respective adjacent pair of the spokes 32, and has a panel body 332 that is formed with a cooling vent 331. Each adjacent pair of the adornment panels 33 define a gap 333 that exposes a respective one of said spokes 32. In the present embodiment, the centre disc 31 is made of a metallic material and the spokes 32 are made of a carbon fibre composite material. However, in other embodiments of the wheel rim assembly, other materials may be used, for example, the spokes 32 may be made of an aluminium alloy material.

It should be noted, in other embodiments of the wheel rim assembly the first fastening members 4 may extend through the spokes 32 with the end section fastening into the rim 2, and the second fastening member 5 may extend through the spokes 32 with the end section fastening into the centre disc 31.

The removable fastening of the first and second fastening members 4, 5 allows the centre disc 31, the rim 2, and the spokes 32 to become removably attached together. In the present embodiment, each of the securing members 6 is bolt-shaped, and has a head portion pressing a respective one of the adornment panels 33 on the centre disc 31, thereby securing the adornment panel 33 to the centre disc 31.

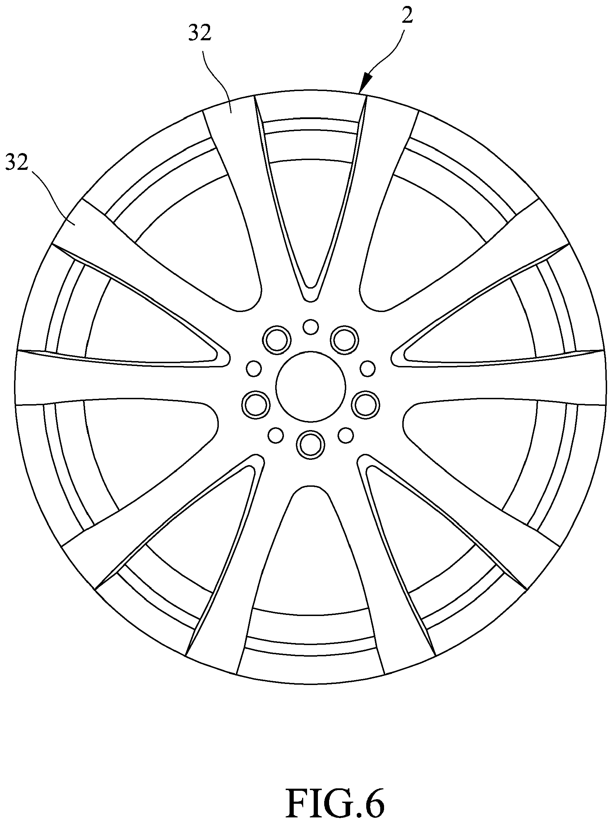

Referring to Figures 2, 4 and 6, a user may change the external appearance or the quantity of the spokes 32 and the adornment panels 33 to create different visual combinations of the spokes 32 and the adornment panels 33. The visual combinations created by the user can affect the overall appearance of the wheel rim assembly, or the user may opt to omit the adornment panels 33 entirely (as shown in Figure 6).

Modular design of the wheel rim assembly according to the present disclosure allows the wheel rim assembly to remain usable when the user wishes to change the external design of the vehicle. The cost of tooling parts used for manufacturing the wheel rim assembly may be reduced and the scope of application may be increased.

In summary, a user may change the adornment panels 33 of the wheel disc 3 and the spokes 32 of the rim 2 according to their wishes, thereby creating a different external appearance for the wheel rim assembly. The wheel rim assembly is suitable for modular production with reduced tooling costs.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A wheel rim assembly including:
a rim (2) that defines a rim opening (21);
a wheel disc (3) that is disposed in said rim opening (21);
a plurality of first fastening members (4) that fasten said wheel disc (3) to said rim (2);
**characterised in that**:
said wheel disc (3) includes
a centre disc (31) defining a centre bore (311) that is coaxial with said rim (2), and
a plurality of spokes (32) interconnecting said centre disc (31) and said rim (2);
each of said first fastening members (4) fastens removably a respective one of said spokes (32) to said rim (2) such that removal of said first fastening member (4) permits separation of said spoke (32) from said rim (2); and
said wheel rim assembly further includes a plurality of second fastening members (5), each of said second fastening members (5) fastening removably a respective one of said spokes (32) to said centre disc (31) such that removal of said second fastening member (5) permits separation of said spoke (32) from said centre disc (31).

2. The wheel rim assembly as claimed in claim 1, **characterised in that** said wheel disc (3) further includes a plurality of adornment panels (33) arranged along a circumference of said rim (2), each of said adornment panels (33) being registered with a space between a respective adjacent pair of said spokes (32).

3. The wheel rim assembly as claimed in claim 2, **characterised in that** each adjacent pair of said adornment panels (33) define a gap (333) that exposes a respective one of said spokes (32).

4. The wheel rim assembly as claimed in any one of claims 2 and 3, **characterised in that** each of said adornment panels (33) has a panel body (332) that is formed with at least one cooling vent (331).

5. The wheel rim assembly as claimed in any one of claims 2 to 4, **characterised in that** said wheel rim assembly further includes a plurality of securing members (6), each of said securing members (6) securing a respective one of said adornment panels (33) to said centre disc (31).

6. The wheel rim assembly as claimed in any one of claims 1 to 5, **characterised in that**:
said rim (2) is made of a carbon fibre composite material; and
said centre disc (31) is made of a metallic material.

7. The wheel rim assembly as claimed in claim 6, **characterised in that** said spokes (32) are made of a carbon fibre composite material.

8. The wheel rim assembly as claimed in claim 6, **characterised in that** said spokes (32) are made of an aluminium alloy material.
